# EUROPEAN PATENT APPLICATION

(11) **EP 2 123 418 A1**
(43) Date of publication of application: **25.11.2009**
(21) Application number: 08425361.6
(22) Date of filing: 21.05.2008
(51) Int. Cl.: B29B 17/02, D21B 1/02

(54) **Method for recycling composite material**

(71) Applicant: Eco Quadrinvest S.r.l., 89900 Vibo Valentia (IT)
(72) Inventor: Lecce, Roberto, 10132 Torino (IT); Cerutti, Silvano, 10147 Salassa (Torino) (IT)
(74) Representative: Gerbino, Angelo

(57) **Abstract**

The method for recycling composite material comprising cellulose, plastics material, aluminium and water and obtained by a pulping process, comprises the phases of:
- introducing the material into a tank full of water to allow settling of heavy foreign bodies and separation of the residual solid fraction,
- contrifuging the residual solid fraction, so as to reduce its moisture content,
- shredding and drying the solid fraction, so as to obtain a dried material having a water content of less than 2% and a cellulose content of less than 2%,
- compacting the dried material, and
- extruding the compacted material and subdividing it into granules.

## Description

The present invention relates to a method for recycling composite material formed from cellulose, plastics material and aluminium, in particular the multilayer laminate commonly known by the brand name Tetrapak.

According to the prior art, Tetrapak (registered trademark) containers are subjected in a paper mill to a pulping process which allows 65-70% of the cellulose originally present to be recovered. On the other hand, the residual proportion of the composite material, moistened by the pulping treatment, is landfilled or incinerated.

The object of the present invention is to provide a method for recycling said residual proportion which allows it to be converted into a "secondary" raw material.

According to the invention, said object is achieved thanks to a method comprising the phases of:
- introducing the material into a tank full of water to allow settling of heavy foreign bodies and separation of the residual solid fraction,
- centrifuging the residual solid fraction, so as to reduce its moisture content,
- shredding and drying said solid fraction, so as to obtain a dried material having a water content of less than 2% and a cellulose content of less than 2%,
- compacting the dried material, and
- extruding the compacted material and subdividing it into granules.

The final granulated material behaves in substantially the same way as a filled plastics material and may accordingly be processed using the methods conventional in this sector, such as for example injection moulding, to obtain desired articles.

Such articles include, for example, pens, spectacle frames, miscellaneous stationery articles, insulating panels, motor vehicle components, grilles for household electrical appliances, etc.

The composite material treated in the method of the invention typically comprises from 20 to 30% cellulose, from 10 to 20% plastics material, from 10 to 20% aluminium and from 30 to 45% water. Said percentages should be understood as percentages by weight. Advantageously, the composite material is subjected to a disagglomeration treatment before being introduced into the tank full of water, so as to enable more efficient separation of the foreign bodies enclosed therein.

In preferred embodiments of the method of the invention, the shredding phase makes it possible to obtain a material in the form of flattened particles having a mean area of between 80 and 140 mm², the centrifugation phase is carried out at a speed of between 1200 and 2600 rpm, and/or the compaction phase is carried out so as to obtain a material in briquette form.

Depending on the articles which it is intended to produce with the final granulated material, the extrusion phase may be carried out with various types of extruders.

When said articles must have specific properties, the extrusion phase is carried out in a planetary extruder, once appropriate additives well known in the art have been added to the material to be extruded. For example, the material to be extruded has added to it fluidising agents in a quantity of between 5 and 10 parts per 100 parts of material to be extruded, and/or agents capable of imparting consistency in a quantity of between 10 and 20 parts per 100 parts of material to be extruded.

Alternatively, when the physical properties of the granular material do not have to meet particular requirements, the extrusion phase may be carried out in a twin screw extruder without the addition of particular additives.

A stream of dried material may optionally be divided into two or more sub-streams, each of which is supplied to a specific extruder which has been appropriately selected on the basis of the type of final articles to be produced.

Further advantages and features of the present invention will become clear from the following example of embodiment which is provided by way of non-limiting example.

A composite material obtained by a pulping process carried out in a paper mill has the following percentage by weight composition:
- water 40%
- cellulose 30%
- polyethylene 15%
- aluminium 15%.

The composite material is first disagglomerated by subjecting it to a carding treatment and is then introduced into a tank full of water to allow settling of any heavy foreign bodies and separation of the residual solid fraction which has been softened having absorbed water. Said residual solid fraction is conveyed onwards by means of a comb and a conveyor belt to a centrifuge operating at approx. 1700 rpm and having, on its external surface, holes of a diameter of approx. 2-3 mm so as to allow the majority of the water and the cellulose to escape. The remaining material is then shredded and exposed to a stream of hot air, so as to allow a dried material having the following percentage by weight composition to be obtained:
- polyethylene 49%
- aluminium 49%
- water 1%
- cellulose 1%.

The dried material is then conveyed by means of a cyclone to a compactor, which shapes it into briquettes. After an optional storage phase, the briquettes are then introduced into a planetary extruder once conventional processing additives have been added.

The extruded product is then subdivided into granules which are finally bagged for dispatch to the place of use.

Naturally, the principle of the invention remaining the same, the details of construction and forms of embodiment may be varied widely with respect to those described, which have been given purely by way of example, without thereby departing from the scope of the invention as defined in the attached claims.

## Claims

1. A method for recycling composite material comprising cellulose, plastics material, aluminium and water and obtained from a pulping process, said method comprising the phases of:
- introducing the material into a tank full of water to allow settling of heavy foreign bodies and separation of the residual solid fraction,
- centrifuging the residual solid fraction, so as to reduce its moisture content,
- shredding and drying said solid fraction, so as to obtain a dried material having a water content of less than 2% and a cellulose content of less than 2%,
- compacting the dried material, and
- extruding the compacted material and subdividing it into granules.

2. A method according to claim 1, in which said shredding makes it possible to obtain a material in the form of flattened particles having a mean area of between 80 and 140 mm².

3. A method according to any one of the preceding claims, in which said centrifugation is carried out at a speed of between 1200 and 2600 rpm.

4. A method according to any one of the preceding claims, in which said compaction is carried out in such a manner as to obtain a material in briquette form.

5. A method according to any one of the preceding claims, in which said extrusion is carried out in a planetary extruder.

6. A method according to claim 5, in which the material to be extruded has added to it fluidising agents in a quantity of between 5 and 10 parts per 100 parts of material to be extruded, and/or agents capable of imparting consistency in a quantity of between 10 and 20 parts per 100 parts of material to be extruded.

7. A method according to any one of the preceding claims 1 to 4, in which said extrusion is carried out in a twin screw extruder.

8. A method according to any one of the preceding claims, in which said composite material obtained by a pulping process comprises from 20 to 30% cellulose, from 10 to 20% plastics material, from 10 to 20% aluminium and from 30 to 45% water.

9. A method according to any one of the preceding claims, in which said plastics material is polyethylene.

10. A method according to any one of the preceding claims, in which said composite material is subjected to a disagglomeration treatment before being introduced into the settling tank.
